# EUROPEAN PATENT APPLICATION

(11) **EP 4 360 965 A1**
(43) Date of publication of application: **01.05.2024**
(21) Application number: 22204425.7
(22) Date of filing: 28.10.2022
(51) Int. Cl.: B60S 1/50

(54) **WASHER FLUID SYSTEM FOR A VEHICLE**

(71) Applicant: Volvo Car Corporation, 405 31 Göteborg (SE)
(72) Inventor: MELLERGÅRD, Edvin, 40531 Göteborg (SE)
(74) Representative: Maiwald GmbH

(57) **Abstract**

The present disclosure relates to a washer fluid system (10) for a vehicle (1), a vehicle comprising such washer fluid system and a manufacturing method for such washer fluid system.

The washer fluid system comprises a washer fluid module (20), a first seal member (11) and a second seal member (12). The washer fluid module is arrangeable in the vehicle to provide a washer fluid. The washer fluid module comprises a reservoir (22) and a lid element (21). The reservoir is configured to retain the washer fluid and the lid element is configured to releasably close an opening (23) of the reservoir. The first seal member is arranged at least partially encircle the opening of the reservoir and configured to be deformed when the lid element is in a closed position to seal the opening of the reservoir. The second seal member is arranged on an opposite side of the lid element relative to the first seal member and configured to compress the first seal member in an opening direction of the lid element when the lid element is in the closed position.

## Description

### TECHNICAL FIELD

The present disclosure relates to a washer fluid system for a vehicle, a vehicle comprising such washer fluid system and a manufacturing method for such washer fluid system.

### BACKGROUND ART

A washer fluid is utilized to keep the windscreen clean. The washer fluid may also be utilized for other vehicular windows, like for the rear window, or for the glasses of lights, such as headlights. Further, washer fluid may be utilized to give one or more sensor of the vehicle an undisturbed field of view.

Typically, a washer fluid system comprises a reservoir adapted to contain the washer fluid, which is located below a bonnet. A filling unit with an aperture configured to fill the washer fluid into the washer fluid system is typically located in a vicinity of the reservoir. Therefore, a person, who wants to fill the washer fluid system with more washer fluid, has to open the bonnet and lean in over the engine compartment in order to reach the filling unit and be able to pour washer fluid into it. Opening the bonnet as well as the handling inside the engine compartment involves a number of steps before filling is ready and the vehicle is ready to drive off again. If the filling unit is arranged at an outer surface of the vehicle, the filling unit may suffer from water trapping and/or dirt contamination.

### SUMMARY

Such washer fluid system may be further improved, which facilitates filling of a washer fluid.

The problem is at least partially solved or alleviated by the subject matter of the independent claims of the present disclosure, wherein further examples are incorporated in the dependent claims. It should be noted that the aspects of the disclosure described in the following apply to the washer fluid system for a vehicle, the vehicle comprising such washer fluid system and the manufacturing method for such washer fluid system.

According to the present disclosure, a washer fluid system for a vehicle is presented. The washer fluid system comprises a washer fluid module, a first seal member and a second seal member. The washer fluid module is arrangeable in the vehicle to provide a washer fluid. The washer fluid module comprises a reservoir and a lid element. The reservoir is configured to retain the washer fluid and the lid element is configured to releasably close an opening of the reservoir. The first seal member is arranged at least partially encircle the opening of the reservoir and configured to be deformed when the lid element is in a closed position to seal the opening of the reservoir. The second seal member is arranged on an opposite side of the lid element relative to the first seal member and configured to compress the first seal member in an opening direction of the lid element when the lid element is in the closed position.

The washer fluid system according to the present disclosure allows a user an easy access for filling the washer fluid to the vehicle. The washer fluid system enables a reliable seal as effective as possible by minimizing a volume in a gap between the lid element and subsystems of the vehicle adjacent to the lid element. Specifically, the washer fluid system prevent water from collecting and freezing around the lid element, which may cause opening the lid element harder or even impossible, when ambient temperature drops below freezing. Further, an accumulation of dust and/or other dirt around the lid element of the washer fluid module may be avoided. Moreover, reduction of a gap volume between the lid element and the subsystems arranged adjacent to the lid element may result in reduction of turbulence, which may lead to an improvement of a drag coefficient of the vehicle. Additionally, the washer fluid system may reduce noise, which may be generated by undesired airflow.

The washer fluid module may be configured to provide the washer fluid to clean the outer surface of the vehicle such as front and/or rear windshield, glasses of lights, etc. The washer fluid system may be arranged similar to a fuel port module or a charging module comprising a cover flap. The washer fluid module may comprise the reservoir with the opening and the lid element in order to enable the user filling the washer fluid into the reservoir. The reservoir may be arranged inside the vehicle, preferably in an empty space of a vehicle body. The opening of the reservoir may be an interface for the user to access an interior of the reservoir.

The opening may be protected by the lid element against any contamination, wherein the lid element may be shaped substantially as a flap and mounted at the outer surface of the vehicle to pivotably move between an open position, in other words filling position, and the closed position. The lid element may be connected to the reservoir or the outer surface of the vehicle arranged adjacent to the lid element. Alternatively, the lid element may be connected to the reservoir by means of a hook. Accordingly, the user may be able to access the opening of the reservoir only by opening the lid element without opening further component of the vehicle such as a hood. The lid element and the opening of the reservoir may be arranged at a front, rear and/or lateral portion of the vehicle relative to a forward driving direction of the vehicle.

The first seal member may comprise a resilient material. The first seal member may be mounted at the lid element. Alternatively, the first seal member may be integrally formed with the reservoir. The first seal member may at least partially or entirely surround the opening of the reservoir. The first seal member may directly abut on a bottom portion of the lid element in the closed position of the lid element. The first seal member may be adapted to be deformed and/or compressed when the lid element is closed and covers the opening of the reservoir.

The second seal member may be configured to provide tolerance and enable a good fit between the washer fluid module and the subsystems arranged adjacent to the washer fluid system. The second seal member may be also arranged to at least partially encircle the opening of the reservoir. The second seal member may be arranged inwardly relative to the first seal member. In other words, the first seal member may face the lid element on one side and the second seal member on the other side.

The second seal member may be integrally formed with the reservoir. The second seal member may also comprise a resilient material. However, the second seal member may be more rigid than the first seal member. Alternatively, the first seal member may be more rigid than the second seal member or the first seal member and the second seal member may be equally rigid or resilient. When the lid element is in the closed position, the second seal member may push the first seal member against the lid element, in other words towards the opening direction of the lid element such that the first seal member can be compressed between the lid element and the second seal member.

Accordingly, the first seal member may be deformed along a circumferential direction of the opening, which may minimize the gap between the first seal member and the outer surface of the vehicle arranged adjacent to the lid element. Hence, water trapped in the gap and a freezing risk of the water in the gap may be reduced. Further, an airflow losses and sound through the gap may be also minimized

In an example, the first seal member is arranged to face a bottom portion of the lid element directing to an interior of the reservoir of the washer fluid module. In other words, one side of the first seal member exposed to the environment may abut on the bottom portion of the lid element in the closed position of the lid element. Accordingly, the first seal member may be compressed and/or deformed if the lid element closes the opening of the reservoir of the washer fluid module. Hence, first seal member may provide a tight seal between the opening of the reservoir and the lid element for preventing water and dirt from entering into the reservoir and minimize the gap between the lid element and the subsystems and/or an outer surface of the vehicle adjacent to the lid element.

In an example, the second seal member is arranged such that a circumferential end portion of the first seal member abuts on an outer portion of the second seal member when the lid element is in the closed position. The second seal member may be arranged to at least partially encircle the opening of the reservoir. Additionally, the second seal member may also at least partially encircle the first seal member. The term "circumferential end portion" may be understood as an outermost surface extending in the circumferential direction of the opening of the reservoir. The circumferential end portion of the first seal member may be exposed to the environment, when the lid element is in the closed position.

Preferably, the outer portion of the second seal member exposed to the environment in the open position of the lid element may compress at least the circumferential end portion of the first seal member in the opening direction of the lid element when the lid element is in the closed position. Accordingly, the circumferential end portion of the first seal member may be deformed and/or extended in the circumferential direction of the opening of the reservoir, particularly outwardly from the opening of the reservoir. Hence, the gap between the first seal member and the outer surface of the vehicle adjacent to the lid element may be minimized.

In an example, the circumferential end portion of the first seal member is formed in a curved shape. A convex portion of the circumferential end portion is arranged to face the lid element when the lid element is in the closed position and a concave portion of the circumferential end portion is arranged to face the second seal member. In particular, the cross section of the circumferential end portion perpendicular to an axial direction of the opening of the reservoir may comprise a wave form, preferably a C-shape or an S-shape. Such cross section may extend along a circumference of the first seal member. The curved shape may allow the first seal member to flex but not apply excessive force on the lid element.

The convex portion of the curved shape of the circumferential end portion may be exposed to the environment in the open position of the lid element. The convex portion may abut on the bottom portion of the lid element when the lid element is in the closed position. Whereas, the concave portion of the curved shape of the circumferential end portion may face the second seal member, preferably, the outer portion of the second seal member.

If the lid element is in the closed position, the convex portion of the circumferential end portion may be compressed by the bottom portion of the lid element and the concave portion of the circumferential end portion may be compressed by the second seal member. Accordingly, the curved shape of the circumferential end portion may be extended in the circumferential direction of the opening of the reservoir, preferably outwardly from the opening of the reservoir due to the vertical compression of the lid element and the second seal element. Hence, the tight seal between the opening of the reservoir and the first seal member may be ensured and the gap between the first seal member and the adjacent outer surface of the vehicle may be minimized.

In an example, the convex portion of the circumferential end portion comprises a bump portion. The bump portion is adapted to protrude beyond the lid element when the lid element is in the closed position. The bump portion may be bulged outwardly from an outer profile of the convex portion of the circumferential end portion. The bump portion may be integrally formed with the first seal member and/or the circumferential end portion of the first seal member.

Accordingly, if the lid element is in the closed position, the first seal member, particularly the bump portion, may protrude outwardly beyond the lid element relative to the opening of the reservoir due to the compression of the lid element and/or the second seal member. The protruded bump portion may fill the gap volume between the first seal member and the outer surface of the vehicle arranged adjacent to the lid element without an aesthetic distraction. Hence, the gap between the first seal member and the adjacent outer surface of the vehicle may be minimized, which may reduce the amount of water trapped in the gap and airflow losses thus, noise.

In an example, the bottom portion of the lid element comprises a chamfer portion. The chamfer portion extends at least partially along a circumferential direction of the lid element. The bottom portion of the lid element facing the first seal member may comprise the chamfer portion. The chamfer portion may be arranged along a circumference of the bottom portion of the lid element. The chamfer portion may be arranged inclined upwardly in direction to a top portion of the lid element. The chamfer portion may be also understood as a cut off portion formed at least partially along the circumferential direction of the lid element. Alternatively, the chamfer portion may be formed as a groove portion extending at least partially along the circumferential direction of the lid element.

The chamfer portion or the groove portion may be adapted to receive the convex portion of the circumferential end portion when the lid element is in the closed position. Further, the chamfer portion or the groove portion may be adapted to guide the convex portion and/or the bump portion to protrude outwardly beyond the lid element when the lid element is in the closed position, while the first sealing element, particularly the concave portion of the circumferential end portion pushes the lid element in the opening direction of the lid element. Accordingly, the first seal member may provide the tight seal between the opening of the reservoir and the lid element and minimize the gap between the lid element and the adjacent outer surface of the vehicle.

In an example, the lid element comprises a push-push mechanism. The push-push mechanism may be utilized for opening and/or closing the lid element. The term "push-push mechanism" may be understood in that the lid element may be engaged with the opening of the reservoir and/or the first seal member by manually pushing the lid element in direction to the opening of the reservoir. The washer fluid module may optionally comprise a latch element to fixedly hold the lid element pushed into the opening of the reservoir. The lid element may be released and/or opened from the opening of the reservoir by pushing the lid element again. The push-push mechanism may facilitate a utilization of the washer fluid module.

In an example, the first seal member is attached at the bottom portion of the lid element. The first seal member may be attached at the bottom portion of the lid element by mechanical and/or chemical fastening means. For instance, the first seal member may be fastened at the bottom portion of the lid element by rivets, bolts, screws, brackets, clamps, etc. and/or an adhesive bonding. However, when attaching the first seal member to the lid element, the circumferential end portion may not be connected to any of the fastening means to allow the circumferential end portion to be deformed when the lid element is in the closed position. Additionally or alternatively, the first seal member may be combined with the lid element by a double injection or 2-shot moulding comprising a molten soft material and hard plastic material.

In an example, the first seal member is arranged at an upper side of the second seal member. The washer fluid module may be positioned such that the opening of the reservoir is directed in a vertical direction, preferably upwardly from the opening of the reservoir. Accordingly, the lid element, the first seal member and the second seal member may also be arranged in the vertical direction to securely seal the opening of the reservoir in the vertical direction.

In case of the vertical arrangement of the first seal member and the second seal member, water, dirty or any other contamination may be easily trapped in the gap between the first seal member and the outer surface of the vehicle adjacent to the lid element. To avoid such situation, the circumferential end portion of the first seal member, the outer portion of the second seal member and the chamfer portion of the lid element may be arranged to minimize the gap in the closed position of the lid element.

According to the present disclosure, a vehicle is also presented. The vehicle comprises a washer fluid system as described above. The washer fluid system may be adapted to keep windscreens, glasses of lights and/or covers of one or more sensors clean. The washer fluid system may particularly allow a gap between a first seal member and an outer surface of the vehicle adjacent to a lid element of the washer fluid module to be minimized, which may lead to a reduction of noise, water draining, dirt contamination and/or airflow losses in the gap.

In an example, the vehicle further comprises an intermediate member. The washer fluid system is arranged at the intermediate member between a hood member and a windshield of the vehicle. A conventional washer fluid system may be arranged underneath the hood member. The washer fluid system according to the present disclosure may be arranged at a rear side of the hood member in direction to the windshield and/or a passenger cabin of the vehicle. The intermediate member may extend at least partially, preferably entirely in a lateral direction between the hood member and the windshield of the vehicle. The washer fluid system may be arranged in the intermediate member and the lid element may be exposed to the environment to provide an easy access of the washer fluid system to a user for filling the washer fluid.

In an example, a second seal member of the washer fluid system is mounted along an inner wall of the intermediate member. The second seal member may be directly attached at the inner wall of the intermediate member without any gap therebetween. The second seal member at least partially encircling an opening of the reservoir may serve as a shelf for the first seal member.

In an example, the intermediate member comprises a cover element. The lid element, the cover element and an outer surface of the hood member are arranged flush with each other. The cover element may comprise for instance a plastic panel, which may be painted with the same color as the hood member. The flush arrangement of the lid element, the cover element and the outer surface of the hood member may avoid any additional aerodynamic drag.

In an example, the washer fluid system is arranged at a lateral side of the vehicle. Instead of a vertical arrangement of the washer fluid system, the lid element may be arranged at one of the lateral side of the vehicle. Accordingly, the lid element, the first seal member and the second seal member may be arranged in a horizontal direction along the lateral side of the vehicle.

According to the present disclosure, a method for manufacturing a washer fluid system is also presented. The method comprises
- providing a washer fluid module comprising a reservoir and a lid element,
- arranging a first seal member at least partially encircle the opening of the reservoir, and
- arranging a second seal member on an opposite side of the lid element relative to the first seal member.
The washer fluid module is arrangeable in the vehicle to provide a washer fluid at an outer surface of the vehicle. The reservoir is configured to retain washer fluid and the lid element is configured to releasably close an opening of the reservoir. The first seal member is configured to be deformed when the lid element is in a closed position to seal the opening of the reservoir, and the second seal member is configured to compress the first seal member in an opening direction of the lid element when the lid element is in the closed position.

It should be noted that the above examples may be combined with each other irrespective of the aspect involved. Accordingly, the method may be combined with structural features and, likewise, the system may be combined with features described above with regard to the method.

These and other examples of the present disclosure will become apparent from and elucidated with reference to the embodiments described hereinafter.

### BRIEF DESCRIPTION OF DRAWINGS

Examples according to the present disclosure will be described in the following with reference to the following drawings.
- Fig. 1: shows schematically an example of a vehicle comprising a washer fluid system according to the present disclosure.
- Fig. 2: shows schematically an example of a vehicle comprising a washer fluid system according to the present disclosure.
- Fig. 3: shows schematically an example of a washer fluid system according to the present disclosure.
- Fig. 4: shows schematically an example of a washer fluid system according to the present disclosure.

### DESCRIPTION OF EXAMPLES

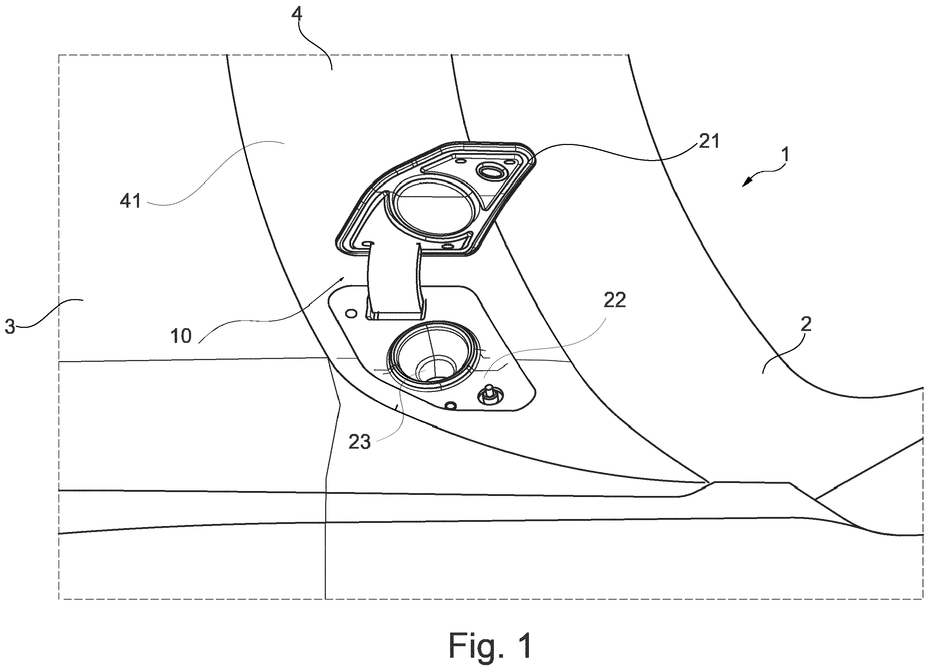

Fig. 1 shows a vehicle 1 comprising a washer fluid system 10. The washer fluid system 10 may be adapted to provide a washer fluid for cleaning windows, light covers, sensor covers or the like exposed to the environment. The washer fluid system 10 is arranged at an intermediate member 4 between a hood member 3 and a front windshield 2 of the vehicle 1. The intermediate member 4 comprises a cover element 41 comprising a plastic panel, which may be painted with the same color as the hood member 3.

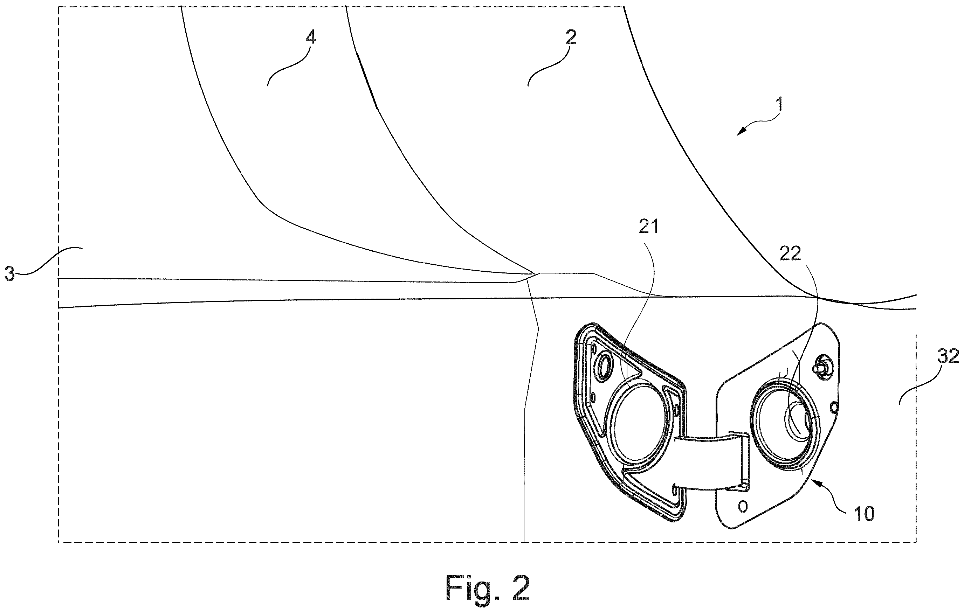

Fig. 2 shows an alternative arrangement of the washer fluid system 10, which is positioned at a lateral side 32 of the vehicle 1.

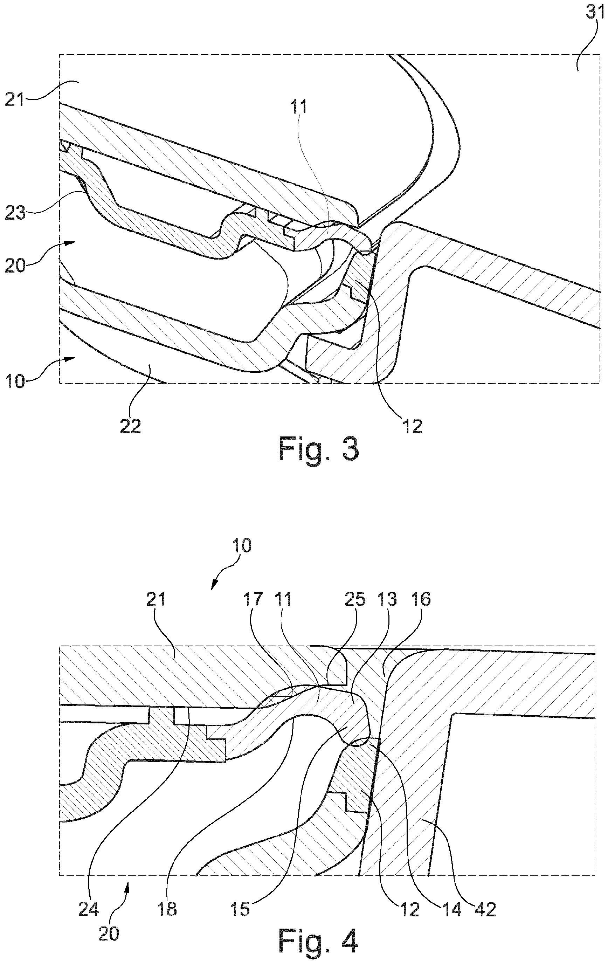

As shown in Fig. 3, the washer fluid system 10 comprises a washer fluid module 20, a first seal member 11 and a second seal member 12. The washer fluid module 20 is arrangeable in the vehicle 1 to provide or refill the washer fluid. The washer fluid module 20 comprises a reservoir 22 and a lid element 21. Preferably, the reservoir 22 is connected to a funnel guiding the washer fluid to the reservoir 22. The reservoir 22 is configured to retain the washer fluid and the lid element 21 is configured to releasably close an opening 23 of the reservoir 22. Preferably, the lid element 21, the cover element 41 of the intermediate member 4 and an outer surface 31 of the hood member 3 are arranged flush with each other.

The first seal member 11 is arranged at least partially encircle the opening 23 of the reservoir 22 and configured to be deformed when the lid element 21 is in a closed position to seal the opening 23 of the reservoir 22. The first seal member 11 is arranged to face a bottom portion 24 of the lid element 21. The bottom portion 24 directs to an interior of the reservoir 22 of the washer fluid module 20.

The second seal member 12 is arranged on an opposite side of the lid element 21 relative to the first seal member 11. In particular, the first seal member 11 is arranged at an upper side of the second seal member 12. The second seal member 12 is configured to compress the first seal member 11 in an opening direction of the lid element 21 when the lid element 21 is in the closed position. The second seal member 12 is mounted along an inner wall 42 of the intermediate member 4. The second seal member 12 is arranged such that a circumferential end portion 15 of the first seal member 11 abuts on an outer portion 14 of the second seal member 12 when the lid element 21 is in the closed position.

The circumferential end portion 15 of the first seal member 11 is formed in a curved shape. A convex portion 17 of the circumferential end portion 15 is arranged to face the lid element 21 when the lid element 21 is in the closed position and a concave portion18 of the circumferential end portion 15 is arranged to face the second seal member 12.

As shown in Fig. 4, the convex portion of the circumferential end portion 15 comprises a bump portion 13. The bump portion 13 is adapted to protrude beyond the lid element 21 when the lid element 21 is in the closed position. In addition, the bottom portion 24 of the lid element 21 comprises a chamfer portion 25 extending at least partially along a circumferential direction of the lid element 21. The protruded bump portion 13 may fill a gap 16 between the first seal member 11 and the outer surface 31 of the vehicle 1 arranged adjacent to the lid element 21 without an aesthetic distraction. Hence, the gap 16 may be minimized, which may reduce the amount of water trapped in the gap 16 and airflow losses thus, noise.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples. Other variations to the disclosed examples can be understood and effected by those skilled in the art in practicing a claimed disclosure, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A washer fluid system (10) for a vehicle (1), comprising
- a washer fluid module (20),
- a first seal member (11), and
- a second seal member (12),
the washer fluid module (20) being arrangeable in the vehicle (1) to provide a washer fluid,
the washer fluid module (20) comprising a reservoir (22) and a lid element (21),
the reservoir (22) being configured to retain the washer fluid and the lid element (21) being configured to releasably close an opening (23) of the reservoir (22),
the first seal member (11) being arranged to at least partially encircle the opening (23) of the reservoir (22) and configured to be deformed when the lid element (21) is in a closed position to seal the opening (23) of the reservoir (22), and
the second seal member (12) being arranged on an opposite side of the lid element (21) relative to the first seal member (11) and configured to compress the first seal member (11) in an opening (23) direction of the lid element (21) when the lid element (21) is in the closed position.

2. The washer fluid system (10) according to claim 1, the first seal member (11) being arranged to face a bottom portion (24) of the lid element (21), the bottom portion (24) directing to an interior of the reservoir (22) of the washer fluid module (20).

3. The washer fluid system (10) according to claim 1 or 2, the second seal member (12) being arranged such that a circumferential end portion (15) of the first seal member (11) abuts on an outer portion (14) of the second seal member (12) when the lid element (21) is in the closed position.

4. The washer fluid system (10) according to claim 3, the circumferential end portion (15) of the first seal member (11) being formed in a curved shape, a convex portion (17) of the circumferential end portion (15) being arranged to face the lid element (21) when the lid element (21) is in the closed position and a concave portion (18) of the circumferential end portion (15) being arranged to face the second seal member (12).

5. The washer fluid system (10) according to any of the preceding claims, the convex portion (17) of the circumferential end portion (15) comprising a bump portion (13), the bump portion (13) being adapted to protrude beyond the lid element (21) when the lid element (21) is in the closed position.

6. The washer fluid system (10) according to any of the preceding claims, the bottom portion (24) of the lid element (21) comprising a chamfer portion (25), the chamfer portion (25) extending at least partially along a circumferential direction of the lid element (21).

7. The washer fluid system (10) according to any of the preceding claims, the lid element (21) comprising a push-push mechanism.

8. The washer fluid system (10) according to any of the preceding claims, the first seal member (11) being attached at the bottom portion (24) of the lid element (21).

9. The washer fluid system (10) according to any of the preceding claims, the first seal member (11) being arranged at an upper side of the second seal member (12).

10. A vehicle (1), the vehicle (1) comprising a washer fluid system (10) according to any of proceeding claims 1 to 9.

11. The vehicle (1) according to claim 10, further comprising an intermediate member, the washer fluid system (10) being arranged at the intermediate member (4) between a hood member (3) and a windshield (2) of the vehicle (1).

12. The vehicle (1) according to claim 10 or 11, a second seal member (12) of the washer fluid system (10) being mounted along an inner wall (42) of the intermediate member (4).

13. The vehicle (1) according to any of the preceding claims 10 to 12, the intermediate member (4) comprising a cover element (41), the lid element (21), the cover element and an outer surface of the hood member (3) being arranged flush with each other.

14. The vehicle (1) according to any of the preceding claims 10 to 13, the washer fluid system (10) being arranged at a lateral side (32) of the vehicle (1).

15. A manufacturing method of a washer fluid system (10) for a vehicle (1), comprising
- providing a washer fluid module (20) comprising a reservoir (22) and a lid element (21),
- arranging a first seal member (11) at least partially encircle the opening (23) of the reservoir (22), and
- arranging a second seal member (12) on an opposite side of the lid element (21) relative to the first seal member (11),
the washer fluid module (20) being arrangeable in the vehicle (1) to provide a washer fluid at an outer surface of the vehicle (1),
the reservoir (22) being configured to retain washer fluid and the lid element (21) being configured to releasably close an opening (23) of the reservoir (22),
the first seal member (11) being configured to be deformed when the lid element (21) is in a closed position to seal the opening (23) of the reservoir (22), and
the second seal member (12) being configured to compress the first seal member (11) in an opening (23) direction of the lid element (21) when the lid element (21) is in the closed position.

## Amended claims

### Amended claims in accordance with Rule 137(2) EPC.

1. A washer fluid system (10) for a vehicle (1), comprising
- a washer fluid module (20),
- a first seal member (11), and
- a second seal member (12),
the washer fluid module (20) being arrangeable in the vehicle (1) to provide a washer fluid,
the washer fluid module (20) comprising a reservoir (22) and a lid element (21),
the reservoir (22) being configured to retain the washer fluid and the lid element (21) being configured to releasably close an opening (23) of the reservoir (22),
**characterized in that**
the first seal member (11) being arranged at the lid element (21) to at least partially encircle the opening (23) of the reservoir (22) and configured to be deformed when the lid element (21) is in a closed position to seal the opening (23) of the reservoir (22), and
the second seal member (12) being arranged on an opposite side of the lid element (21) relative to the first seal member (11) and configured to compress the first seal member (11) in an opening (23) direction of the lid element (21) when the lid element (21) is in the closed position.

2. The washer fluid system (10) according to claim 1, the first seal member (11) being arranged to face a bottom portion (24) of the lid element (21), the bottom portion (24) directing to an interior of the reservoir (22) of the washer fluid module (20).

3. The washer fluid system (10) according to claim 1 or 2, the second seal member (12) being arranged such that a circumferential end portion (15) of the first seal member (11) abuts on an outer portion (14) of the second seal member (12) when the lid element (21) is in the closed position.

4. The washer fluid system (10) according to claim 3, the circumferential end portion (15) of the first seal member (11) being formed in a curved shape, a convex portion (17) of the circumferential end portion (15) being arranged to face the lid element (21) when the lid element (21) is in the closed position and a concave portion (18) of the circumferential end portion (15) being arranged to face the second seal member (12).

5. The washer fluid system (10) according to any of the preceding claims, the convex portion (17) of the circumferential end portion (15) comprising a bump portion (13), the bump portion (13) being adapted to protrude beyond the lid element (21) when the lid element (21) is in the closed position.

6. The washer fluid system (10) according to any of the preceding claims, the bottom portion (24) of the lid element (21) comprising a chamfer portion (25), the chamfer portion (25) extending at least partially along a circumferential direction of the lid element (21).

7. The washer fluid system (10) according to any of the preceding claims, the lid element (21) comprising a push-push mechanism.

8. The washer fluid system (10) according to any of the preceding claims, the first seal member (11) being attached at the bottom portion (24) of the lid element (21).

9. The washer fluid system (10) according to any of the preceding claims, the first seal member (11) being arranged at an upper side of the second seal member (12).

10. A vehicle (1), the vehicle (1) comprising a washer fluid system (10) according to any of proceeding claims 1 to 9.

11. The vehicle (1) according to claim 10, further comprising an intermediate member, the washer fluid system (10) being arranged at the intermediate member (4) between a hood member (3) and a windshield (2) of the vehicle (1).

12. The vehicle (1) according to claim 10 or 11, a second seal member (12) of the washer fluid system (10) being mounted along an inner wall (42) of the intermediate member (4).

13. The vehicle (1) according to any of the preceding claims 10 to 12, the intermediate member (4) comprising a cover element (41), the lid element (21), the cover element and an outer surface of the hood member (3) being arranged flush with each other.

14. The vehicle (1) according to any of the preceding claims 10 to 13, the washer fluid system (10) being arranged at a lateral side (32) of the vehicle (1).

15. A manufacturing method of a washer fluid system (10) for a vehicle (1), comprising
- providing a washer fluid module (20) comprising a reservoir (22) and a lid element (21),
- arranging a first seal member (11) at the lid element (21) to at least partially encircle the opening (23) of the reservoir (22), and
- arranging a second seal member (12) on an opposite side of the lid element (21) relative to the first seal member (11),
the washer fluid module (20) being arrangeable in the vehicle (1) to provide a washer fluid at an outer surface of the vehicle (1),
the reservoir (22) being configured to retain washer fluid and the lid element (21) being configured to releasably close an opening (23) of the reservoir (22),
the first seal member (11) being configured to be deformed when the lid element (21) is in a closed position to seal the opening (23) of the reservoir (22), and
the second seal member (12) being configured to compress the first seal member (11) in an opening (23) direction of the lid element (21) when the lid element (21) is in the closed position.
